# EUROPÄISCHE PATENTSCHRIFT

(11) **EP 3 235 786 B1**
(45) Veröffentlichungstag und Bekanntmachung des Hinweises auf die Patenterteilung: **22.05.2019**
(21) Anmeldenummer: 17162279.8
(22) Anmeldetag: 22.03.2017
(51) Int. Cl.: C01B 13/10

(54) **VORRICHTUNG UND VERFAHREN ZUM ERZEUGEN VON OZON**
DEVICE AND METHOD FOR GENERATING OZONE
DISPOSITIF ET PROCÉDÉ DE PRODUCTION D'OZONE

(30) Priorität: 21.04.2016 DE 102016004815
(43) Veröffentlichungstag der Anmeldung: 25.10.2017
(73) Patentinhaber: Messer Group GmbH, 65812 Bad Soden (DE)
(72) Erfinder: BACHLEITNER, Walter, 4600 Wels (AT); SCHLATTER, Robert, 5606 Dintikon (CH); HERMANS, Monica, 41470 Neuss (DE)
(74) Vertreter: Münzel, Joachim R.

(56) Entgegenhaltungen:
- DE-A1- 19 811 274
- GB-A- 908 366
- GB-A- 955 825
- JP-A- H09 315 804
- US-A- 5 888 271

## Beschreibung

Die Erfindung betrifft eine Vorrichtung zum Erzeugen von Ozon, mit einem an eine Sauerstoffzuleitung angeschlossenen Ozongenerator, der mit einer eine Eingangsleitung und eine Ausgangsleitung für ein Wärmeübertragungsmedium aufweisende Kühleinrichtung ausgerüstet ist, und mit einem in der Sauerstoffzuleitung, zwischen einem Tank für flüssigen Sauerstoff und dem Ozongenerator, angeordneten Verdampfer, der zwecks thermischem Kontaktieren des durch die Sauerstoffzuleitung geführten flüssigen Sauerstoffs mit einem Wärmeübertragungsmedium einen mit einer Zuleitung für flüssigen Sauerstoff und einer Ausleitung für verdampften Sauerstoff ausgerüsteten Wärmetauscher aufweist.

Die Erfindung betrifft des weiteren ein Verfahren zur Erzeugung von Ozon, bei dem in einem Ozongenerator aus reinem Sauerstoff mittels stiller elektrischer Entladung ein ozon- und sauerstoffhaltiges Gasgemisch erzeugt wird.

Die Erzeugung von Ozon erfolgt heute meist nach dem Verfahren der stillen elektrischen Entladung: In einem mit einem sauerstoffhaltigen Gas gefüllten Behälter wird zwischen zwei Elektroden, von denen mindestens eine von einem Dielektrikum umhüllt ist, eine Spannung erzeugt, die so stark ist, dass die Bindung der Atome im Sauerstoffmolekül aufgebrochen wird und sich die Atome teilweise neu zu Ozon kombinieren. Dabei spielt der Sauerstoffgehalt im Ausgangsgas eine wesentliche Rolle für die Effizienz des Verfahrens. Bei Verwendung von Umgebungsluft können bis zu etwa 8 g Ozon pro Stunde erzeugt werden; industrielle Ozongeneratoren arbeiten dagegen mit reinem Sauerstoff als Ausgangsgas, wodurch ein Produktionsausstoß von mehreren Kilogramm Ozon pro Stunde erzielt werden kann.

Die Effizienz der Erzeugung von Ozon nach dem Prinzip der stillen Entladung ist zudem sehr temperaturabhängig, da es bei höheren Temperaturen vermehrt zu Spontanzerfällen der erzeugten Ozonmoleküle kommt. So führt beispielsweise bei einem mit Kühlwasser gekühlten Ozongenerator eine Erhöhung der Kühlwassertemperatur von 10°C auf 30°C zu einer Leistungseinbuße von bis zu 35%.

Aus diesem Grunde muss die bei der Ozonerzeugung anfallende Abwärme mittels geeigneter Kühleinrichtungen abgeführt werden. In einem typischen Aufbau eines Ozongenerators wird zumindest eine der Elektroden durch den Durchtritt von Wasser oder einer anderen Kühlflüssigkeit oder mittels einer elektrischen Kühleinrichtung gekühlt. So wird beispielsweise in der US 6 193 852 B1 eine Apparatur zur Erzeugung von Ozon beschrieben, die auf einer niedrigen Arbeitstemperatur arbeitet, wobei flüssiger Stickstoff als Kühlmedium verwendet wird.

Aus der GB 955 825 A1 ein Verfahren zum Erzeugen von Ozon bekannt, bei dem zur Erzeugung eines Gasgemisches aus Ozon und Sauerstoff flüssiger Sauerstoff eingesetzt wird, dessen Kälteinhalt zur Kühlung des Ozongenerators eingesetzt wird. Dazu wird der flüssige Sauerstoff verdampft und auf eine Temperatur gebracht, die deutlich unterhalb der Umgebungstemperatur, jedoch oberhalb des Taupunkts des im Ozongenerator erzeugten Gasgemisches liegt. Anschließend wird der Sauerstoff dem Ozongenerator zugeführt. Bei einem Taupunkt eines aus 15 Vol.-% Ozon und 85 Vol.-% Sauerstoff bestehenden Gasgemisches von -145°C wird daher als bevorzugter Temperaturbereich, auf den der verdampfte Sauerstoff gebracht wird, ein Bereich zwischen -70°C und -140°C angesehen. Die tiefen Temperaturen werden bei diesem Gegenstand dadurch erreicht, dass der Ozongenerator in einem thermisch gut isolierten Behälter oberhalb eines Bades aus flüssigem Sauerstoff aufgenommen ist. Im Betrieb des Ozongenerators wird von diesem Wärme auf das Sauerstoffbad übertragen, wodurch - ebenso wie durch Wärmeeintrag aus der Umgebung - beständig Sauerstoff aus dem Bad verdampft. Der verdampfte Sauerstoff wird über eine Labyrinth-artige Zuführung zum Ozongenerator geleitet, wobei er sich auf die gewünschte Arbeitstemperatur erwärmt. Anschließend wird der gasförmige Sauerstoff abgeführt; aus dem Bad verdampfter Sauerstoff wird durch Zuführung von frischem flüssigem Sauerstoff ersetzt.

Ähnliche Verfahren sind in US 5 888 271, JP H09 315804 und GB 908 366 beschrieben.

Nachteilig bei diesem Gegenstand ist, dass der Kälteinhalt des flüssigen Sauerstoffs nur sehr unzureichend genutzt wird und zudem die Temperatur des dem Ozongenerator zugeführten Sauerstoffs nur sehr schwer zu kontrollieren ist.

Aus der EP 0 498 585 B2 ist ein Verfahren sowie eine Vorrichtung zur Erzeugung von Ozon bekannt, bei dem zur Erzeugung des Ozons eingesetztes Sauerstoffgas dadurch bereitgestellt wird, dass in einem Mischer flüssiger Sauerstoff in eine Atmosphäre aus gasförmigem Sauerstoff eingesprüht wird und dabei verdampft. Das sich ergebende kalte Sauerstoffgas wird dem Ozongenerator zugeführt. Über das Mengenverhältnis aus gasförmigem und flüssigem Sauerstoff kann die Temperatur des Sauerstoffgases geregelt wird.

Bei diesem Gegenstand kann die Temperatur des dem Ozongenerator zugeführten Sauerstoffs gut kontrolliert werden, allerdings ist der Wirkungsgrad der Ozonerzeugung noch verbesserungswürdig.

Aufgabe der Erfindung ist daher, eine Vorrichtung zum Erzeugen von Ozon bzw. eines ozonhaltigen Gases aus kaltem Sauerstoff zu schaffen, bei der ein hoher Wirkungsgrad bei der Erzeugung von Ozon erzielt und der Sauerstoff mit einer gut einstellbaren, regelbaren und im Betrieb konstanten Temperatur zugeführt werden kann.

Gelöst ist diese Aufgabe durch eine Vorrichtung mit den Merkmalen des Patentanspruchs 1.

Eine Vorrichtung der eingangs genannten Art und Zweckbestimmung ist also dadurch gekennzeichnet, dass der Wärmetauscher des Verdampfers mit einer Zuleitung und einer Ausleitung für ein Wärmeübertragungsmedium ausgerüstet ist, und die Zuleitung für das Wärmeübertragungsmedium des Wärmetauschers mit der Ausgangsleitung für das Wärmeübertragungsmedium der Kühleinrichtung des Ozongenerators, und die Ausleitung für das Wärmeübertragungsmedium des Wärmetauschers mit der Eingangsleitung für das Wärmeübertragungsmedium der Kühleinrichtung strömungsverbunden ist.

Erfindungsgemäß wird also das Wärmeübertragungsmedium im Kreislauf vom Ozongenerator zum Verdampfer und zurück geführt. Dabei wird die im Ozongenerator während der stillen Entladung erzeugte Wärme zum Verdampfen des für die Ozonerzeugung eingesetzten flüssigen Sauerstoffs verwendet. Das Wärmeübertragungsmedium wird beim Kontakt mit dem verdampfenden Sauerstoff gekühlt und anschließend erneut zur Kühlung des Ozongenerators eingesetzt.

Die Verwendung von flüssigem Sauerstoff als Ausgangsprodukt gewährleistet einen niedrigen Feuchtigkeitsgehalt des dem Ozongenerator zugeführten Sauerstoffs, weshalb die Betriebstemperatur des Ozongenerators sehr niedrig gewählt werden kann. Durch die gleichzeitige Verwendung des flüssigen Sauerstoffs zur Kühlung des Wärmeübertragungsmediums ist es möglich, auch die Kühlung des Ozongenerators auf einer im Vergleich zu üblichen Ozongeneratoren niedrigen Temperatur zu fahren. Erfindungsgemäß beträgt die bevorzugte Temperatur des Wärmeübertragungsmediums beim Eintritt in den Ozongenerator bei Verwendung von Wasser zwischen 0°C und 5°C. Bei Zusätzen von Glykol- oder Glykolzusätzen im Wasser oder bei Verwendung von Kühlsole, Kohlendioxid oder gasförmiger Wärmeübertragungsmedien können Temperaturen unter 0°C realisiert werden, beispielsweise Temperaturen zwischen 0°C und -20°C oder darunter. Durch die insgesamt reduzierten Betriebstemperaturen wird die Effizienz der Ozonerzeugung wesentlich gesteigert.

Der Verdampfer umfasst beispielsweise ein thermisch gut isoliertes Gehäuse, innerhalb dessen der Wärmetauscher aufgenommen ist, an dessen Wärmetauscherflächen eine Wärmeübertagung vom Wärmeübertragungsmedium auf den Flüssigsauerstoff stattfindet. Bevorzugt sind alle Leitungen, die das Wärmeträgermedium führen, sowie eine zur Förderung des Wärmeträgermediums eingesetzte Pumpe, thermisch gut isoliert.

Um die Temperatur des Wärmeübertragungsmediums genau einstellen zu können, ist in der Zuleitung für das Wärmeübertragungsmedium an den Wärmetauscher des Verdampfers eine Kühl- und/oder Heizeinrichtung angeordnet. Zweckmäßigerweise ist die Kühleinrichtung in ihrer Kühlleistung verstellbar ausgebildet und kann in Abhängigkeit von den jeweiligen Erfordernissen, beispielsweise in Abhängigkeit vom Ozongehalt des im Ozongenerator produzierten Gasgemisches oder der Temperatur des dem Ozongenerator zugeführten Sauerstoffs geregelt werden.

Als bevorzugtes Wärmeübertragungsmedium kommt insbesondere eine Flüssigkeit, wie Wasser, Glykol, Kühlsole oder flüssiges Kohlendioxid, oder ein Gas, wie beispielsweise Luft, Stickstoff, gasförmiges Kohlendioxid oder ein Edelgas, zum Einsatz.

Die Erfindung ist dadurch gekennzeichnet, dass von der Sauerstoffzuleitung, stromauf zum Verdampfer, eine Leitung für flüssigen Sauerstoff abzweigt, die stromab zum Verdampfer an einem Kaltgasmischer in die Sauerstoffleitung einmündet. In der abzweigenden Sauerstoffleitung ist bevorzugt ein Regelventil angeordnet, das über eine Steuereinheit mit einem stromab zum Kaltgasmischer in der Sauerstoffzuleitung angeordneten Temperatursensor in Datenverbindung steht. Der gasförmige Sauerstoff aus dem Verdampfer wird also mit flüssigem Sauerstoff aus dem Tank vermischt, wobei die Menge des in den gasförmigen Sauerstoff eingetragenen Flüssigsauerstoffs beispielsweise in Abhängigkeit von einer gewünschten Temperatur des dem Ozongenerator insgesamt zugeführten Sauerstoffs geregelt wird, beispielsweise auf einen Temperaturwert zwischen -30°C bis -70°C.

Die Aufgabe der Erfindung wird auch durch ein Verfahren zum Erzeugen von Ozon gelöst, bei dem in einem Ozongenerator aus reinem Sauerstoff mittels stiller elektrischer Entladung ein ozon- und sauerstoffhaltiges Gasgemisch erzeugt wird, wobei der Ozongenerator mit einem Wärmeübertragungsmedium gekühlt und der zur Erzeugung des Gasgemisches eingesetzte Sauerstoff als flüssiger Sauerstoff aus einem Tank entnommen, in einem Verdampfer durch Wärmekontakt mit einem Wärmeübertragungsmedium verdampft und über eine Sauerstoffzuleitung dem Ozongenerator zugeführt wird, wobei das Wärmeübertragungsmedium erfindungsgemäß im Kreislauf geführt und nacheinander im Verdampfer zum Verdampfen des flüssigen Sauerstoffs und in einer Kühleinrichtung zur Kühlung des Ozongenerators eingesetzt wird.

Erfindungsgemäß wird also die im Ozongenerator erzeugte Wärme zugleich für die Verdampfung des zur Ozonerzeugung eingesetzten flüssigen Sauerstoffs genutzt. Durch die Kreislaufführung des Wärmeträgermediums wird eine sehr effiziente Arbeitsweise des Ozongenerators bewirkt.

Bevorzugt wird die Menge und/oder Temperatur des dem Verdampfer zugeführten Wärmübertragungsmediums geregelt, wobei als Regelparameter beispielsweise die Temperatur des Wärmeübertragungsmediums bei der Zuführung in den Ozongenerator und/oder die Temperatur des verdampften Sauerstoffs bei dessen Zuführung zum Ozongenerator und/oder der Ozongehalt des im Ozongenerator erzeugten Gasgemisches verwendet wird. Eine Mengenregulierung des dem Verdampfer zugeführten Wärmeübertragungsmediums kann beispielsweise dadurch erreicht werden, dass lediglich ein regelbarer Teilstrom des aus dem Ozongenerator tretenden Wärmeübertragungsmediums über eine entsprechende Teilstromleitung dem Verdampfer zugeführt wird, während der übrige Teilstrom des Wärmeübertragungsmediums über eine Bypassleitung am Verdampfer vorbeigeführt und - nach Durchlaufen einer geeigneten Kühlung und der Vereinigung mit dem durch den Verdampfer geführten Teilstrom - in die Kühleinrichtung des Ozongenerators zurückgeführt wird.

Die Erfindung sieht vor, dass der flüssige Sauerstoff aus dem Tank in zwei Teilströme aufgeteilt wird, wobei ein Teilstrom im Verdampfer verdampft und der verdampfte Teilstrom an einem stromab zum Verdampfer angeordneten Kaltgasmischer mit einem zweiten Teilstrom flüssigen Sauerstoffs aus dem Tank vermischt wird. Das Mengenverhältnis aus erstem und zweiten Teilstrom des flüssigen Sauerstoffs wird dabei bevorzugt in Abhängigkeit von einer in der Sauerstoffzuleitung zum Ozongenerator gemessenen Temperatur geregelt. Durch die Einspeisung einer variierbaren Menge von flüssigem Sauerstoff in den gasförmigen Sauerstoff aus dem Verdampfer wird eine zusätzliche Möglichkeit zu schaffen, die Temperaturverhältnisse im Ozongenerator an die Erfordernisse anzupassen und dabei insbesondere einen dauerhaft konstanten Temperaturwert des dem Ozongenerator zugeführten Sauerstoff zu realisieren. Bevorzugt wird der Eintrag von Wärme aus dem Wärmeübertragungsmedium in den Teilstrom des zu verdampfenden Sauerstoffs und/oder das Mengenverhältnis aus erstem und zweitem Teilstrom des flüssigen Sauerstoffs so geregelt, dass die Temperatur des dem Ozongenerator zugeführten Sauerstoffs auf einen Wert zwischen -20°C und -140°C, bevorzugt zwischen -30°C und -70°C eingestellt wird.

Damit wird ein Temperaturbereich erreicht, in dem einerseits mit einer hohen Effizienz Ozon gebildet wird, andererseits die Temperatur sich sicher über der Taupunkttemperatur des im Generator erzeugten ozonhaltigen Gasgemisches bewegt, wodurch eine korrosive Beschädigung des Ozongenerators aufgrund von sich bildender Feuchtigkeit vermieden wird.

In einer abermals vorteilhaften Ausgestaltung der Erfindung wird das Wärmeübertragungsmedium im Verdampfer durch Wärmekontakt mit dem flüssigen Sauerstoff auf eine Temperatur zwischen minus 80°C und +20°C, bevorzugt zwischen minus 50°C und +10°C, gebracht.

Um eine hohe Effizienz des Verfahrens sicherzustellen und gleichzeitig zu vermeiden, dass sich das im Ozongenerator entstandene Ozon verflüssigt, wird das Mengenverhältnis aus erstem und zweitem Teilstrom des flüssigen Sauerstoffs bevorzugt so geregelt, dass die Temperatur des im Ozongenerator hergestellten, Sauerstoff und Ozon enthaltenden Gasgemisches eine Temperatur zwischen minus 70°C und minus 140°C aufweist.

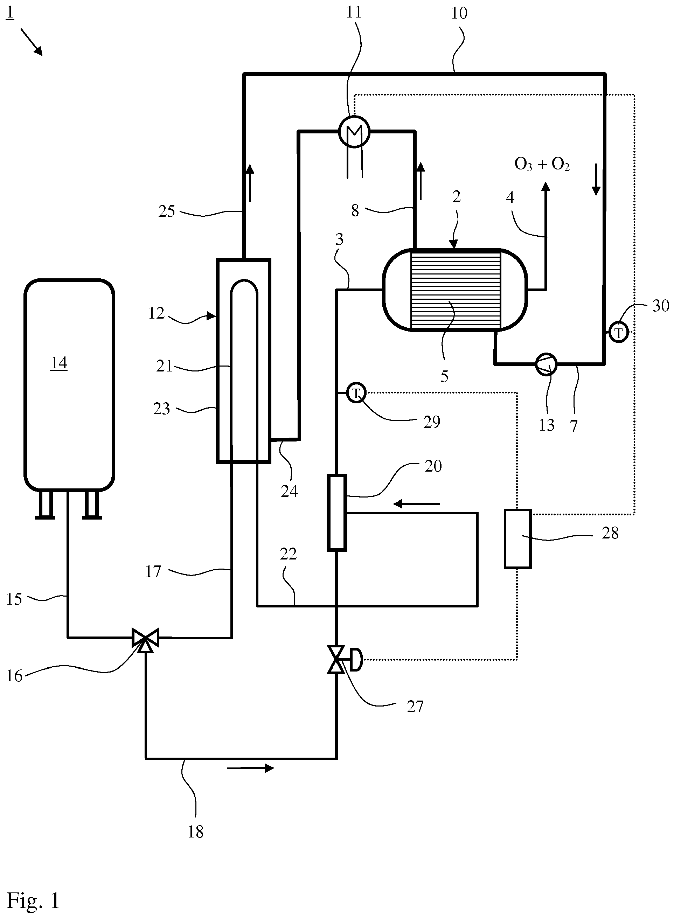

Anhand der Zeichnung soll ein Ausführungsbeispiele der Erfindung näher erläutert werden. Die einzige Zeichnung (Fig. 1) zeigt schematisch das Funktionsprinzip einer erfindungsgemäßen Vorrichtung.

Die in Fig. 1 gezeigte Vorrichtung 1 umfasst einen Ozongenerator 2, in dem im Wege stiller elektrischer Entladung aus Sauerstoff ein Ozon und Sauerstoff enthaltendes Gasgemisch gebildet wird. In den Ozongenerator 2 mündet eine Sauerstoffzuleitung 3 sowie eine Produktausgangsleitung 4 für das im Ozongenerator 2 erzeugte ozonhaltige Gasgemisch ein. Der Ozongenerator 2 ist in an sich bekannter Weise mit einer Kühleinrichtung 5 ausgerüstet, die eine Eingangsleitung 7 und eine Ausgangsleitung 8 für ein Wärmeübertragungsmedium sowie eine hier nicht gezeigte Wärmetauscherfläche umfasst, an der im Ozongenerator 2 angeordnete und hier ebenfalls nicht gezeigte Elektroden mit dem Wärmeübertragungsmedium in Wärmekontakt gebracht und dadurch gekühlt werden. Die Eingangsleitung 7 und die Ausgangsleitung 8 sind über einen Kühlkreislauf 10 miteinander strömungsverbunden, in dem neben dem Ozongenerator 2 eine Heiz-/Kühleinrichtung 11, ein Verdampfer 12 für flüssigen Sauerstoff und eine Pumpe 13 angeordnet sind. Bei dem im Kühlkreislauf 10 geführten Wärmeübertragungsmedium handelt es sich beispielsweise um Wasser, Glykol, ein Wasser-Glykol-Gemisch, Kühlsole, flüssiges oder gasförmiges Kohlendioxid, Luft oder ein anderes Gas oder Gasgemisch, wie beispielsweise Stickstoff oder Edelgas. Bei der Heiz-/Kühleinrichtung 11 handelt es sich um eine Apparatur zum Temperieren des Wärmeträgermediums, bei der dem Wärmeübertragungsmedium durch Wärmetausch mit einem externen Medium, beispielsweise Umgebungsluft, Kühlwasser, etc. Wärme entzogen oder zugeführt wird.

Die Sauerstoffzuleitung 3 steht mit einer Quelle für flüssigen Sauerstoff, im Ausführungsbeispiel mit einem Tank 14, in Strömungsverbindung. Dazu führt vom Tank 14 eine Entnahmeleitung 15 zu einer Verzweigung 16. Von der Verzweigung 16 führt zum einen eine Flüssigsauerstoffleitung 17 zum Verdampfer 12, zum andern eine Flüssigsauerstoffleitung 18 zu einem Kaltgasmischer 20, der wiederum in die Sauerstoffzuleitung 3 einmündet. Im Verdampfer 12 ist eine Wärmeübertragungsfläche, beispielsweise eine Rohrschlange 21, vorgesehen, die an die Flüssigsauerstoffzuleitung 17 angeschlossen ist und in einer Sauerstoffleitung 22 ausmündet, die ebenfalls zum Kaltgasmischer 20 führt. Die Rohrschlange 21 ist in einem thermisch gut isolierten Gehäuse 23 aufgenommen, das in den Kühlkreislauf 10 integriert ist, wobei Wärmeübertragungsmedium aus der Ausgangsleitung 8 über eine Zuführleitung 24 in das Gehäuse 23 eingeleitet und über eine Abführleitung 25 abgeführt wird, die mit der Zuführleitung 7 strömungsverbunden ist. Auch die sauerstoffführenden Leitungen 3, 15, 17, 18, 22 sind thermisch gut isoliert, um den Eintrag von Wärme aus der Umgebungsatmosphäre möglichst gering zu halten.

In der Flüssigsauerstoffleitung 18 ist ein Steuerventil 27 angeordnet, das über eine Steuerung 28 mit einem in der Sauerstoffzuleitung 3 integrierten Temperatursensor 29 in Datenverbindung steht, der die Temperatur des durch die Sauerstoffzuleitung geführten Gases misst. Mit der Steuerung 28 sowie mit einem Temperatursensor 30 in der Eingangsleitung 7 steht auch die Heiz-/Kühleinrichtung 11 in Datenverbindung.

Im Betrieb der Vorrichtung 1 wird flüssiger Sauerstoff aus dem Tank 14 über die Zuleitungen 15 zur Verzweigung geführt, von der aus ein erster Teilstrom über die Zuleitung 17 geführt, im Verdampfer 12 verdampft und als Sauerstoffgas in die Zuleitung 22 eingespeist wird. Ein zweiter Teilstrom wird im flüssigen Zustand durch die Zuleitung 18 geführt. Die beiden Teilströme werden am Kaltgasmischer 20 zu einem kalten Sauerstoffgas vereinigt, das über die Sauerstoffzuleitung 3 dem Ozongenerator 2 zugeführt und dort zur Erzeugung eines ozonhaltigen Gases eingesetzt wird.

Gleichzeitig wird die Temperatur des über die Sauerstoffzuleitung 3 dem Ozongenerator 2 zugeführten Sauerstoffs unabhängig von der Wärmeübertragung im Verdampfer 11 dadurch geregelt, dass das Verhältnis der über die Leitungen 17, 22 bzw. 18 geführten Sauerstoffteilströme variiert wird. Dazu wird die Menge des über die Leitung 18 geführten Flüssigsauerstoffs in Abhängigkeit von einer am Temperatursensor 29 gemessenen Wert auf einen Wert von beispielsweise zwischen minus 70°C und minus 30°C eingestellt, der während des Betriebs des Ozongenerators 2 aufrecht erhalten wird.

Der Ozongenerator 2 wird mit Wärmeträgermedium gekühlt, das im Kühlkreislauf 10 geführt wird. Das aus der Ausgangsleitung 8 tretende Wärmeträgermedium wird im Verdampfer 12 durch Wärmekontakt mit dem ersten, dabei verdampfendem Sauerstoffteilstrom gekühlt, gegebenenfalls durch Einsatz der Heiz/Kühleinrichtung 11 zusätzlich temperiert und so auf einen gewünschten Temperaturwert gebracht, der durch Messung am Temperatursensor 30 kontrolliert wird. Beim Eintritt in den Ozongenerator 2 an der Eingangsleitung 7 weist das Wärmeträgermedium beispielsweise eine Temperatur zwischen minus 80°C und 20°C, bevorzugt zwischen minus 50°C und 10°C, besonders bevorzugt zwischen minus 20°C und 5°C auf.

Durch die niedrige Betriebstemperatur des Ozongenerators 2 wird eine hohe Effizienz der Ozonerzeugung erzielt. Energiebedarf und Sauerstoffverbrauch werden im Vergleich zu konventionellen Ozonerzeugungsanlagen reduziert. Durch die Kreislaufführung des Wärmeträgermediums wird zudem nur wenig Energie für die Kühlung des Ozongenerators benötigt. Zudem liegt auch das Produktgasgemisch auf einer sehr niedrigen Temperatur vor, beispielsweise zwischen minus 140°C und minus 70°C, wodurch die Lösung dieses überwiegend aus Sauerstoff und Ozon bestehenden Gasgemisches beim Eintrag in wässerige Systeme, beispielsweise in Trinkwässern, begünstigt wird.

### Bezugszeichenliste

1.Vorrichtung
2.Ozongenerator
3.Sauerstoffzuleitung
4. Produktausgangsleitung
5.Kühleinrichtung
6.-
7.Eingangsleitung
8.Ausgangsleitung
9.-
10.Kühlkreislauf
11.Heiz-/Kühleinrichtung
12.Verdampfer
13.Pumpe
14.Tank
15.Entnahmeleitung
16.Verzweigung
17.Flüssigsauerstoffleitung
18.Flüssigsauerstoffleitung
19.-
20.Kaltgasmischer
21.Rohrschlange
22.Sauerstoffleitung
23.Gehäuse
24.Zuführleitung
25.Abführleitung
26.-
27.Steuerventil
28.Steuerung
29.Temperatursensor
30.Temperatursensor

## Patentansprüche

1. Vorrichtung zum Erzeugen von Ozon, mit einem an eine Sauerstoffzuleitung (3) angeschlossenen Ozongenerator (2), der mit einer eine Eingangsleitung (7) und eine Ausgangsleitung (8) für ein Wärmeübertragungsmedium aufweisende Kühleinrichtung (5) ausgerüstet ist, und mit einem in der Sauerstoffzuleitung (3), zwischen einem Tank (14) für flüssigen Sauerstoff und dem Ozongenerator (2), angeordneten Verdampfer (12), der einen mit einer Zuleitung (17) für flüssigen Sauerstoff und einer Ausleitung (22) für verdampften Sauerstoff ausgerüsteten Wärmetauscher (21) aufweist,
**dadurch gekennzeichnet,**
**dass** der Wärmetauscher (21) des Verdampfers (12) mit einer Zuleitung (24) und einer Ausleitung (25) für ein Wärmeübertragungsmedium ausgerüstet ist, und die Zuleitung (25) für das Wärmeübertragungsmedium des Wärmetauschers (21) mit der Ausgangsleitung (8) für das Wärmeübertragungsmedium der Kühleinrichtung (5) des Ozongenerators (2) und die Ausleitung (25) für das Wärmeübertragungsmedium des Wärmetauschers (21) mit der Eingangsleitung (7) für das Wärmeübertragungsmedium der Kühleinrichtung (5) strömungsverbunden ist und von der Sauerstoffzuleitung (3), stromauf zum Verdampfer (12), eine Leitung (18) für flüssigen Sauerstoff abzweigt, die stromab zum Verdampfer (12) an einem Kaltgasmischer (20) in die Sauerstoffzuleitung (3) einmündet.

2. Vorrichtung nach Anspruch 1, **dadurch gekennzeichnet, dass** in der Zuleitung (25) für das Wärmeübertragungsmedium an den Wärmetauscher (21) eine Kühl- und/oder Heizeinrichtung (11) angeordnet ist.

3. Vorrichtung nach Anspruch 1 oder 2, **dadurch gekennzeichnet, dass** als Wärmeübertragungsmedium Luft, Wasser, ein Wasser-Glykol-Gemisch oder Kühlsole zum Einsatz kommt.

4. Vorrichtung nach Anspruch 1, **dadurch gekennzeichnet dass** in der Leitung (18) für flüssigen Sauerstoff ein Regelventil (17) vorgesehen ist, das mit einem stromab zum Kaltgasmischer (20) in der Sauerstoffzuleitung (3) angeordneten Temperatursensor (11) in Datenverbindung steht.

5. Verfahren zum Erzeugen von Ozon, bei dem in einem Ozongenerator (2) aus reinem Sauerstoff mittels stiller elektrischer Entladung ein Ozon und Sauerstoff enthaltendes Gasgemisch erzeugt wird, wobei der Ozongenerator (2) mit einem Wärmeübertragungsmedium gekühlt und der zur Erzeugung des Gasgemisches eingesetzte Sauerstoff als flüssiger Sauerstoff aus einem Tank (14) entnommen, in einem Verdampfer (12) durch Wärmekontakt mit einem Wärmeübertragungsmedium verdampft und über eine Sauerstoffzuleitung (3) dem Ozongenerator (2) zugeführt wird,
**dadurch gekennzeichnet, dass** das Wärmeübertragungsmedium in einem Kreislauf (10) geführt wird und nacheinander im Verdampfer (12) zum Verdampfen des flüssigen Sauerstoffs und in einer Kühleinrichtung (5) zur Kühlung des Ozongenerators (2) eingesetzt wird und der dem Tank (14) entnommene flüssige Sauerstoff in zwei Teilströme aufgeteilt wird, wobei ein erster Teilstrom über den Verdampfer (12) geführt und an einem stromab zum Verdampfer (12) angeordneten Kaltgasmischer (20) mit einem zweiten Teilstrom flüssigen Sauerstoffs vermischt wird, und das Gemisch aus erstem und zweitem Teilstrom über die Sauerstoffzuleitung (3) dem Ozongenerator (2) zugeführt wird, wobei das Mengenverhältnis aus erstem und zweiten Teilstrom in Abhängigkeit von einer in der Sauerstoffzuleitung (3) gemessenen Temperatur des Sauerstoffs geregelt wird.

6. Verfahren nach Anspruch 5, **dadurch gekennzeichnet, dass** die Menge und/oder die Temperatur des dem Verdampfer (12) zugeführten Wärmübertragungsmediums in Abhängigkeit von einem physikalischen oder chemischen Parameter des Wärmeübertragungsmediums und/oder des erzeugten Gasgemisches geregelt wird.

7. Verfahren nach einem der Ansprüche 5 oder 6, **dadurch gekennzeichnet, dass** das Mengenverhältnis aus erstem und zweitem Teilstrom des flüssigen Sauerstoffs so geregelt wird, dass die Temperatur des dem Ozongenerator (2) zugeführten Sauerstoff zwischen -20°C und -140°C, bevorzugt zwischen -30°C und -70°C beträgt.

8. Verfahren nach einem der Ansprüche 5 bis 7, **dadurch gekennzeichnet, dass** das Wärmeübertragungsmedium im Verdampfer (12) durch Wärmekontakt mit dem flüssigen Sauerstoff auf eine Temperatur zwischen -80°C bis +20°C, bevorzugt zwischen -50°C und +10°C gebracht wird.

9. Verfahren nach einem der Ansprüche 5 bis 8, **dadurch gekennzeichnet, dass** das Mengenverhältnis aus erstem und zweitem Teilstrom des flüssigen Sauerstoffs so geregelt wird, dass die Temperatur des im Ozongenerator (2) erzeugten Gasgemisches eine Temperatur zwischen -70°C und -140°C aufweist.

## Claims

1. Apparatus for generating ozone, having an ozone generator (2) connected to an oxygen feed line (3), which ozone generator is equipped with a cooling device (5) comprising an inlet line (7) and an outlet line (8) for a heat transfer medium, and having an evaporator (12) arranged in the oxygen feed line (3) between a tank (14) for liquid oxygen and the ozone generator (2), which evaporator has a heat exchanger (21) equipped with a feed line (17) for liquid oxygen and a discharge line (22) for evaporated oxygen,
**characterized in that**
the heat exchanger (21) of the evaporator (12) is equipped with a feed line (24) and a discharge line (25) for a heat transfer medium, and the feed line (25) for the heat transfer medium of the heat exchanger (21) is in flow communication with the outlet line (8) for the heat transfer medium of the cooling device (5) of the ozone generator (2), and the discharge line (25) for the heat transfer medium of the heat exchanger (21) is in flow communication with the inlet line (7) for the heat transfer medium of the cooling device (5), and, upstream of the evaporator (12), a line (18) for liquid oxygen branches off from the oxygen feed line (3), which line (18) opens into the oxygen feed line (3) downstream of the evaporator (12) at a cold-gas mixer (20).

2. Apparatus according to Claim 1, **characterized in that** a cooling and/or heating device (11) is arranged in the feed line (25) for the heat transfer medium to the heat exchanger (21).

3. Apparatus according to Claim 1 or 2, **characterized in that**, as heat transfer medium, air, water, a water/glycol mixture or cooling brine is used.

4. Apparatus according to Claim 1, **characterized in that** a control valve (17) is provided in the line (18) for liquid oxygen, which valve is connected for data communication to a temperature sensor (11) arranged downstream of the cold-gas mixer in the oxygen feed line (3).

5. Method for generating ozone, in which a gas mixture containing ozone and oxygen is produced in an ozone generator (2) from pure oxygen by means of dielectric barrier discharge, wherein the ozone generator (2) is cooled with a heat transfer medium and the oxygen used to produce the gas mixture is withdrawn as liquid oxygen from a tank (14), evaporated in an evaporator (12) by thermal contact with a heat transfer medium and fed via an oxygen feed line (3) to the ozone generator (2), **characterized in that** the heat transfer medium is conducted in a circuit (10) and is used successively in the evaporator (12) to evaporate the liquid oxygen and in a cooling device (5) to cool the ozone generator (2), and the liquid oxygen withdrawn from the tank (14) is split into two substreams, wherein a first substream is conducted through the evaporator (12) and is mixed with a second substream of liquid oxygen in a cold-gas mixer (20) arranged downstream of the evaporator (12), and the mixture of first and second substream is fed via the oxygen feed line (3) to the ozone generator (2), wherein the ratio of first and second substream is controlled as a fraction of a temperature of the oxygen measured in the oxygen feed line (3).

6. Method according to Claim 5, **characterized in that** the amount and/or the temperature of the heat transfer medium fed to the evaporator (12) is controlled as a fraction of a physical or chemical parameter of the heat transfer medium and/or of the gas mixture produced.

7. Method according to either of Claims 5 and 6, **characterized in that** the ratio of first and second substream of the liquid oxygen is controlled such that the temperature of the oxygen fed to the ozone generator (2) is between -20°C and -140°C, preferably between -30°C and -70°C.

8. Method according to any of Claims 5 to 7, **characterized in that** the heat transfer medium in the evaporator (12) is brought to a temperature between -80°C to +20°C, preferably between -50°C and +10°C, by thermal contact with the liquid oxygen.

9. Method according to any of Claims 5 to 8, **characterized in that** the ratio of first and second substream of the liquid oxygen is controlled such that the temperature of the gas mixture produced in the ozone generator (2) has a temperature between -70°C and -140°C.

## Revendications

1. Dispositif pour la production d'ozone, comprenant un générateur d'ozone (2) raccordé à une conduite d'alimentation d'oxygène (3), qui est équipé d'un dispositif de refroidissement (5) comprenant une conduite d'entrée (7) et une conduite de sortie (8) pour un milieu caloporteur, et comprenant un évaporateur (12) agencé dans la conduite d'alimentation d'oxygène (3), entre un réservoir (14) pour l'oxygène liquide et le générateur d'ozone (2), qui comprend un échangeur de chaleur (21) équipé d'une conduite d'alimentation (17) pour l'oxygène liquide et d'une conduite de déchargement (22) pour l'oxygène évaporé,
**caractérisé en ce que**
l'échangeur de chaleur (21) de l'évaporateur (12) est équipé d'une conduite d'alimentation (24) et d'une conduite de déchargement (25) pour un milieu caloporteur, et la conduite d'alimentation (25) pour le milieu caloporteur de l'échangeur de chaleur (21) est en communication fluidique avec la conduite de sortie (8) pour le milieu caloporteur du dispositif de refroidissement (5) du générateur d'ozone (2) et la conduite de déchargement (25) pour le milieu caloporteur de l'échangeur de chaleur (21) avec la conduite d'entrée (7) pour le milieu caloporteur du dispositif de refroidissement (5), et une conduite (18) pour l'oxygène liquide est dérivée de la conduite d'alimentation d'oxygène (3) en amont de l'évaporateur (12), et débouche en aval de l'évaporateur (12) au niveau d'un mélangeur de gaz froid (20) dans la conduite d'alimentation d'oxygène (3).

2. Dispositif selon la revendication 1, **caractérisé en ce qu'**un dispositif de refroidissement et/ou de chauffage (11) est agencé dans la conduite d'alimentation (25) pour le milieu caloporteur dans l'échangeur de chaleur (21).

3. Dispositif selon la revendication 1 ou 2, **caractérisé en ce que** de l'air, de l'eau, un mélange eau-glycol ou une saumure de refroidissement est utilisé en tant que milieu caloporteur.

4. Dispositif selon la revendication 1, **caractérisé en ce qu'**une soupape de régulation (17) est prévue dans la conduite (18) pour l'oxygène liquide, qui se trouve en communication de données avec un capteur de température (11) agencé en aval du mélangeur de gaz froid (20) dans la conduite d'alimentation d'oxygène (3) .

5. Procédé de production d'ozone, selon lequel un mélange gazeux contenant de l'ozone et de l'oxygène est produit dans un générateur d'ozone (2) à partir d'oxygène pur au moyen d'une décharge électrique silencieuse, le générateur d'ozone (2) étant refroidi avec un milieu caloporteur et l'oxygène utilisé pour la production du mélange gazeux étant soutiré d'un réservoir (14) sous la forme d'oxygène liquide, évaporé dans un évaporateur (12) par contact thermique avec un milieu caloporteur, et introduit dans le générateur d'ozone (2) par une conduite d'alimentation d'oxygène (3),
**caractérisé en ce que** le milieu caloporteur est mis en circulation dans un circuit (10), et utilisé successivement dans l'évaporateur (12) pour l'évaporation de l'oxygène liquide et dans un dispositif de refroidissement (5) pour le refroidissement du générateur d'ozone (2), et l'oxygène liquide soutiré du réservoir (14) est divisé en deux courants partiels, un premier courant partiel étant acheminé dans l'évaporateur (12) et mélangé dans un mélangeur de gaz froid (20) agencé en aval de l'évaporateur (12) avec un deuxième courant partiel d'oxygène liquide, et le mélange du premier et du deuxième courant partiel est introduit par la conduite d'alimentation d'oxygène (3) dans le générateur d'ozone (2), le rapport entre les quantités du premier et du deuxième courant partiel étant ajusté en fonction d'une température de l'oxygène mesurée dans la conduite d'alimentation d'oxygène (3).

6. Procédé selon la revendication 5, **caractérisé en ce que** la quantité et/ou la température du milieu caloporteur introduit dans l'évaporateur (12) sont ajustées en fonction d'un paramètre physique ou chimique du milieu caloporteur et/ou du mélange gazeux produit.

7. Procédé selon l'une quelconque des revendications 5 ou 6, **caractérisé en ce que** le rapport entre les quantités du premier et du deuxième courant partiel d'oxygène liquide est ajusté de telle sorte que la température de l'oxygène introduit dans le générateur d'ozone (2) soit comprise entre -20 °C et -140 °C, de préférence entre -30 °C et -70 °C.

8. Procédé selon l'une quelconque des revendications 5 à 7, **caractérisé en ce que** le milieu caloporteur est porté à une température comprise entre -80 °C et +20 °C, de préférence entre -50 °C et +10 °C, dans l'évaporateur (12) par contact thermique avec l'oxygène liquide.

9. Procédé selon l'une quelconque des revendications 5 à 8, **caractérisé en ce que** le rapport entre les quantités du premier et du deuxième courant partiel d'oxygène liquide est ajusté de telle sorte que la température du mélange gazeux produit dans le générateur d'ozone (2) soit comprise entre -70 °C et - 140 °C.
